# FASCICULE DE BREVET EUROPEEN

(11) **EP 2 515 729 B1**
(45) Date de publication et mention de la délivrance du brevet: **22.04.2015**
(21) Numéro de dépôt: 10807631.6
(22) Date de dépôt: 20.12.2010
(51) Int. Cl.: A47J 36/02, B05D 5/08, A47J 27/00

(54) **ARTICLE CULINAIRE COMPRENANT UN REVÊTEMENT EXTERNE ANTIADHÉSIF, COMPORTANT UN DÉCOR AU NIVEAU DU FOND EXTERNE, ET SON PROCÉDÉ DE FABRICATION**
KOCHARTIKEL MIT ÄUSSERER ANTIHAFTBESCHICHTUNG MIT DEKORATION AUF DER AUSSENBASIS UND HERSTELLUNGSVERFAHREN
COOKWARE ARTICLE INCLUDING AN OUTER NONSTICK COATING COMPRISING A DECORATION ON THE OUTER BASE AND ITS MANUFACTURING PROCESS

(30) Priorité: 23.12.2009 FR 0959522
(43) Date de publication de la demande: 31.10.2012
(73) Titulaire: SEB S.A., 69130 Ecully (FR)
(72) Inventeur: VOISIN, Laurent, F-74150 Sales (FR)
(74) Mandataire: Novagraaf Technologies
(86) Numéro de dépôt international: PCT/FR2010/052823
(87) Numéro de publication internationale: WO 2011/086276

(56) Documents cités:
- WO-A2-97/25159
- US-A- 4 104 225
- US-A- 4 180 609
- US-A- 4 477 517

## Description

De manière générale, la présente invention concerne un article culinaire comprenant un support métallique sous forme de calotte, dont la face extérieure est pourvue d'un revêtement externe antiadhésif (notamment à base de PTFE) avec un décor au niveau du fond extérieur, du type décrit dans le document WO 97/25159 A2. Il s'agit en particulier d'un décor sérigraphié à base de PTFE adapté à l'enduction des fonds extérieurs d'articles culinaires préformés.

La manière de fabriquer l'article culinaire avec son fond extérieur sérigraphié est également concernée.

A l'heure actuelle, il existe principalement deux catégories de procédés combinant l'enduction intérieure et extérieure d'articles culinaires.

La première catégorie de procédés comprend des procédés qui consistent à enduire d'abord des flans d'aluminium (recto et verso), et à mettre ensuite l'article en forme. Il est alors facile de déposer un décor à base de PTFE par sérigraphie sur le fond extérieur de l'article, tout en limitant la quantité déposée (en l'occurrence cette quantité est à l'heure actuelle limitée à un gramme). Ainsi, le brevet européen EP 0 188 958 décrit une composition colorée à base de résine fluorocarbonée, qui est adaptée à une application par sérigraphie par ajout d'un agent gélifiant et/ou épaississant. Les supports sont des disques plans, qui sont emboutis après avoir été revêtus.

Par ailleurs, le brevet européen EP 0 672 497 décrit un procédé pour former un décor sur un ustensile culinaire qui comprend les étapes suivantes :
a) attaque chimique d'une face de l'ustensile pour former sur celle-ci des microcavités d'accrochage ;
b) application, par exemple par sérigraphie, directement sur des zones prédéterminées délimitant le décor, d'une composition à base de résine fluorocarbonée et d'un pigment coloré ;
c) chauffage pour cuire la résine fluorocarbonée du décor,
d) puis, application sur cette face, y compris le décor, d'une surface de pressage avec une pression suffisante pour éliminer les microcavités situées à l'extérieur des zones recouvertes.

D'après l'enseignement général de ce document, on part de supports plans qui sont d'abord revêtus puis emboutis.

Par ailleurs, la demande de brevet japonais JP°11076934 décrit une feuille d'acier pourvue d'un revêtement décoratif résistant à la chaleur et antiadhésif. Cette feuille d'acier est utilisable notamment à titre de matériau pour des articles culinaires. Le revêtement comprend une première couche sous forme de film coloré résistant à la chaleur et antiadhésif, sur laquelle est ensuite déposée par pulvérisation un revêtement comprenant des motifs discontinus. La première couche sous forme de film coloré est obtenue à partir d'une composition comprenant au moins une résine résistante à la chaleur (notamment choisie parmi les résines polyéthersulfone, polyphénylsulphide et polyamide-imide), et au moins une résine fluorocarbonée (notamment choisie parmi les résines PTFE et les copolymères de perfluoro-alkylvinylethertetrafluoroethylène).

Le revêtement à motifs discontinus est obtenu à partir d'une composition comprenant essentiellement une résine fluorocarbonée, également choisie parmi les résines PTFE et les copolymères de perfluoroalkylvinyléther-tétrafluoroéthylène.

Toutefois, JP 11076934 ne décrit pas des articles préformés mais des feuilles, destinées à être embouties. En outre, le décor de JP 11076934 n'est pas appliqué par sérigraphie mais par pulvérisation.

Dans la demande de brevet japonais JP 2001295069, il s'agit également d'une feuille d'acier, qui est revêtue d'une couche décorative à base de résine. Cette feuille est formée comme suit :
- formation sur la surface frontale de la feuille d'un film de primaire consistant essentiellement en une résine de polyéthersulfone et en une résine de PTFE, puis
- formation sur le film de primaire, d'un film de finition translucide, formé essentiellement d'une résine de PTFE et d'une résine de polyéther sulfone, et enfin
- formation à la surface de la couche de finition d'une couche supérieure colorée présentant des motifs disjoints sous forme de spots (motifs ponctuels d'apparence sensiblement circulaire).

Une couche intermédiaire de tels motifs peut être formée au niveau de l'interface entre le primaire et la couche de finition. Ici également, il n'est pas fait mention dans JP 2001295069 d'un article préformé, mais uniquement de feuilles d'acier décorées. En outre, JP°2001295069 n'indique pas quel est le mode d'application de la (des) couche(s) décorative(s).

La seconde catégorie comprend des procédés qui consistent à enduire les fonds extérieurs de pièces préformées, obtenues préalablement à l'enduction par emboutissage de flans métalliques ou par moulage de métaux fondus (aluminium ou acier par exemple).

Ces procédés permettent de réaliser des articles revêtus ayant une épaisseur de métal importante.

Dans cette catégorie de procédé, les pièces en forme sont généralement enduites par pulvérisation. A l'intérieur des pièces on trouve typiquement un revêtement anti-adhérent, notamment à base de PTFE. A l'extérieur, les revêtements extérieurs sont des revêtements antiadhésifs de type émail, laque ou à base de PTFE

Les revêtements sont sérigraphiés dans le cas des laques et des émaux, mais pas dans le cas des revêtements à base de PTFE.

Les revêtements de type émail présentent de nombreux inconvénients. En particulier, ils nécessitent une température de cuisson très élevée, ce qui a pour conséquence de nécessairement commencer par la sérigraphie du fond extérieur, puis de procéder à l'enduction de l'intérieur de la pièce.

Or, étant donné qu'il s'agit généralement d'un revêtement interne à base de PTFE dont la température de cuisson est plus faible que celle de l'émail, ce procédé nécessitera alors deux passages au four (impliquant de fait un coût énergétique élevé).

Les revêtements de type émail ne tachent, ni ne brûlent, mais ils peuvent rayer les plaques vitrocéramiques. Enfin, l'émail impose une nature de support particulier dont on ne peut s'affranchir.

Les revêtements de type laque (par exemple à base de silicone polyester ou PES) présentent une bonne tenue au lave-vaisselle. Ils présentent cependant de nombreux inconvénients.

En effet, une laque brûle à la flamme et se tache. Par ailleurs, bien que la température de cuisson d'une laque soit beaucoup plus faible que celle d'un émail, elle est aussi plus faible que celle du PTFE. Par conséquent, dans le cas d'un procédé dans lequel l'intérieur et l'extérieur de l'article sont enduits, cela nécessite également deux cuissons.

Pour pallier les inconvénients précités des revêtements extérieurs en laque ou en émail, l'homme du métier a alors pensé utiliser des revêtements antiadhésifs à base de PTFE. A la différence des revêtements extérieurs à base de laque ou d'émail, on procède par une pulvérisation d'une composition antiadhésive à base de PTFE sur la face extérieure de la jupe (paroi latérale) et du fond de l'article. Toutefois, un tel procédé d'application ne permet d'obtenir un décor que si on enlève au niveau du fond une partie du revêtement pulvérisé. Certaines parties du support se trouvent alors dénudées, laissant apparaître le support (notamment en aluminium). Ces parties dénudées sont très peu résistantes au lave-vaisselle.

En outre, cela induit un gaspillage non négligeable de matière.

In n'existe pas à l'heure actuelle d'article culinaire entièrement recouvert extérieurement par un revêtement à base de PTFE tout en possédant un décor au niveau du fond.

Le problème technique que la présente se propose de résoudre consiste à réaliser un article culinaire qui peut être relativement épais (ce qui est possible uniquement à partir d'un support préformé présentant la forme finale de l'article culinaire, en l'occurrence une calotte creuse), dont la face externe est à la fois totalement enduite d'un revêtement à base de PTFE et décorée, tout en s'affranchissant de la nature du support.

Cet article culinaire doit en outre présenter les propriétés avantageuses suivantes :
- une bonne résistance aux agressions des détergents lors du passage au lave-vaisselle,
- une résistance thermique supérieure à celle des revêtements de type laque, et
- une résistance à l'encrassement par les graisses de cuisson qui est amélioré, notamment par rapport à celui observé sur des revêtements de type laque ou émail.

Or, la demanderesse a découvert de manière surprenante un procédé permettant d'atteindre cet objectif tout en palliant les inconvénients de l'art antérieur précités.

Plus particulièrement, la présente invention a pour objet un article culinaire selon la revendication 1.

Si la couche de finition recouvrait toute la surface extérieure de l'article et non pas uniquement la jupe (paroi latérale), on aurait, au niveau du fond proprement dit, une tri-couche à base de résine fluorocarbonée (de préférence du PTFE). Cela augmenterait la quantité totale de PTFE déposée, et laisserait la possibilité d'atteindre, voire de dépasser la quantité maximale de 1 g retenue pour rester dans une gamme de concentration ne présentant pas de risque pour la santé des usagers en cas de dégradation totale thermique totale du revêtement.

Par ailleurs, la couche du décor recouvre légèrement la couche de finition car cette dernière étant déposée par pulvérisation déborde légèrement sur le fond externe de l'articlé. Cette configuration est également préférable pour des raisons de sécurité. En effet, la couche de décor est globalement moins riche en résine fluorocarbonée (de préférence du PTFE) que la couche de finition, il s'ensuit qu'elle est moins apte à glisser par exemple sur les grilles d'un brûleur à gaz et donc réduit le risque de renversement accidentel.

En effet, la couche de finition sur la jupe de l'article contient au moins 95% en poids par rapport au poids de la couche d'au moins une résine fluorocarbonée (typiquement du PTFE), tandis que la couche de décor ne contient que 90% de résine fluorocarbonée. Or, une couche de revêtement fluorocarboné présente une sensibilité à la glisse à partir de 95% en poids de résine fluorocarbonée.

Par sensibilité à la glisse on désigne l'aptitude conférée à l'article culinaire de ne pas rester en position sur le foyer chauffant. Cette propriété est liée aux coefficients de glissement statique et dynamique de la couche en contact. Pour des raisons de sécurité cette sensibilité à la glisse doit être minimisée. Une couche de revêtement présentant un taux de résine fluorocarbonée (typiquement du PTFE) entre 85 et 93% en poids a une sensibilité à la glisse moindre.

Parmi les pigments utilisables dans la couche de décor selon l'invention, on peut notamment citer le dioxyde de titane, l'oxyde de fer II FeO, l'oxyde de fer III Fe2O3, le noir de carbone, le rouge de pyralène, les paillettes métalliques, les oxydes mixtes de cobalt et de manganèse, les pigments bleus à base de mica et d'oxyde de titane et leurs mélanges.

De manière avantageuse, le motif de la couche de décor peut également comprendre, outre le pigment, au moins une charge.

Parmi les charges utilisables dans la couche de décor selon l'invention, on peut notamment citer les charges minérales telles que la silice, l'alumine, le corindon, les argiles, le quartz, et leurs mélanges.

De manière avantageuse, la face intérieure du support peut également être recouverte d'un revêtement antiadhésif, qui comprend de préférence au moins une résine thermostable résistant à au moins 200°C, par exemple une résine fluorocarbonée (de préférence du PTFE) ou une résine silicone.

La présente invention a encore pour objet un procédé de fabrication d'un article culinaire selon la revendication 10.

Le procédé selon l'invention permet de fabriquer des articles culinaires à partir de calottes métalliques relativement épaisses, notamment obtenues par emboutissages de flans métalliques ou par moulage de métaux fondus (en aluminium ou en acier par exemple), qui sont entièrement enduites extérieurement par un revêtement anti-adhérent à base de résine fluorocarbonée avec un décor coloré au niveau du fond extérieur de l'article.

La présence de silice colloïdale dans la couche de finition à raison d'au moins 1,5% en poids permet de déposer la couche de finition sur la jupe de l'article (paroi latérale) préalablement au dépôt par sérigraphie de la pâte pigmentée de revêtement fluorocarbonée.

En effet, la demanderesse a découvert que l'application préalable d'une couche de finition contenant moins de 1,5% de silice conduit à l'obtention d'un film pulvérulent et peu cohésif, susceptible d'encrasser très rapidement les mailles de l'écran de sérigraphie. Ces bouchages sont alors à l'origine de nombreux défauts dans la définition du motif. Pour éviter ces défauts (tout en procédant selon le même procédé), il serait alors nécessaire de nettoyer très fréquemment (avec une fréquence élevée qui correspond à moins d'une dizaine de dépôts entre chaque nettoyage) les écrans de sérigraphie rendant ainsi l'opération de sérigrahie peu productive et particulièrement coûteuse.

Il est important de procéder d'abord au dépôt de la couche de finition sur la jupe, avant de former le décor extérieur au niveau du fond.

Dans le cas inverse, la couche de finition viendrait nécessairement recouvrir légèrement la couche de fond sérigraphiée au niveau de son contour extérieur, ce qui est gênant à double titre. D'une part, cela ne permet que d'utiliser une couche de finition incolore, car dans le cas contraire, elle viendrait polluer chromatiquement le décor. D'autre part, étant donné que la couche de finition est plus riche en PTFE que la couche de décor sérigraphiée, elle rendrait le fond plus « glissant ». Cela est évidemment dangereux pour l'utilisateur.

Néanmoins, le dépôt successif de la couche de finition, puis de la pâte pigmentée sérigraphiée (servant de décor) pose le problème de l'encrassement de l'écran de sérigraphie par la composition de finition, évoqué précédemment. En effet, celle-ci constitue après séchage (en l'absence de silice ou à tout le moins d'une quantité suffisante) un film pulvérulent peu cohésif, susceptible d'encrasser très rapidement les mailles de l'écran de sérigraphie. Ce phénomène est à l'origine de nombreux défauts dans la définition du motif.

La présence de silice colloïdale en quantité suffisante permet de ralentir ce phénomène, car la silice confère une cohésion plus importante à la couche de finition sèche du fait des nombreuses interactions physico-chimiques entre les grains de silice ou de ces derniers avec les particules de résine fluorée.

Selon un mode de réalisation particulièrement avantageux du procédé selon l'invention, ce dernier comporte en outre une étape b') de réalisation d'un revêtement antiadhésif sur la face intérieure de la calotte, qui précède l'étape b) de dépôt par pulvérisation de la composition de primaire pour former une couche humide de primaire d'accrochage. Pour cela, on applique sur la face intérieure de la calotte une composition de revêtement antiadhésif, qui est ensuite préfrittée.

Dans le cas d'une composition de revêtement antiadhésif comprenant une résine fluorocarbonée (en particulier du PTFE), le préfrittage est une cuisson réalisée à une température comprise entre 250°C et 360°C pendant une à trois minutes.

La calotte est avantageusement en acier ou en aluminium (ou l'un de ses alliages).

Avantageusement, on procédera à une préparation de surface de la face extérieure de la calotte, préalablement au dépôt par pulvérisation de la composition de primaire sur l'intégralité de la surface extérieure de l'article. Cette préparation de surface peut notamment être réalisée par sablage ou microbillage.

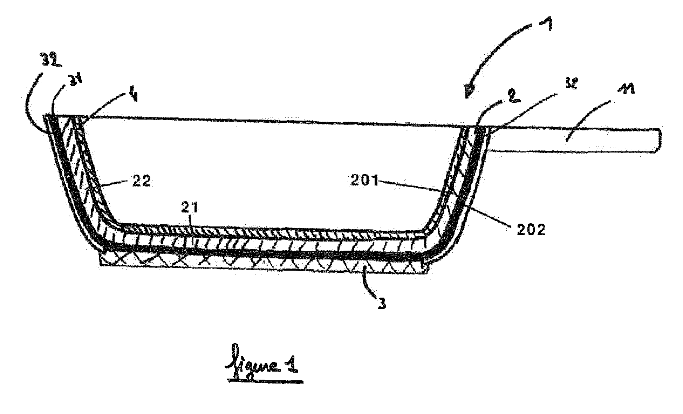

D'autres avantages et particularités de la présente invention résulteront de la description qui va suivre, donnée à titre d'exemple non limitatif. La figure 1 représente une vue schématique en coupe d'un exemple d'article culinaire en dehors de la portée de l'invention, enduit à l'intérieur et à l'extérieur et présentant un décor sérigraphié au niveau du fond.

Cette figure représente en particulier, à titre d'exemple d'article culinaire une poêle 1 avec une poignée de préhension 11, qui comprend une calotte métallique creuse 2 présentant un fond 21 et une paroi latérale 22 s'élevant à partir du fond 21.

La calotte 2 présente une face intérieure 201 concave destinée à être disposée du côté des aliments susceptibles d'y être introduits, et une face extérieure 202 destinée à être disposée vers une source de chaleur (par exemple une plaque de cuisson).

La face intérieure 201 est revêtue d'un revêtement antiadhésif 4, tandis qu'un revêtement externe 3 recouvre la face extérieure 202.

Le revêtement externe 3 comporte :
- une couche de primaire d'accrochage 31 recouvrant totalement la face extérieure 202, et
- une couche de finition 32 recouvrant la couche de primaire d'accrochage 31 au niveau de ladite paroi latérale 22.

L'article culinaire selon l'invention comporte, en plus, une couche de décor recouvrant la couche de primaire d'accrochage 31 au niveau du fond 21, la couche de décor comprenant au moins un motif de couleur différente de celle de la couche primaire d'accrochage 31.

Les couches de primaire 31, de finition 32 et de décor sont à base de PTFE.

Dans les exemples comparatifs qui suivent, la couche de finition ne contient pas de silice, ce qui provoque un encrassage de l'écran de sérigraphie.

Dans les exemples selon l'invention, la couche de finition contient de la silice pour pallier ce problème.

Ces exemples sont présentés ci-après.

### EXEMPLES

### Produits

### Supports

- calottes en aluminium de diamètre 26 cm sablées à l'intérieur et à l'extérieur (présentant une rugosité moyenne arithmétique Ra mesurée comprise entre 4 et 6 µm),
- calottes lisses simplement dégraissées.

| **Compositions à déposer sur la face externe des calottes** | |
|---|---|
| **Composition de primaire d'accrochage noir** | |
| Résine PAI (29% sec) : | 134,67 g |
| NMP : | 65,29 g |
| Triéthylamine : | 9,84 g |
| Diéthyléthanolamine : | 3,75 |
| Eau : | 257,17 |
| NMP : | 71,9 g |
| Octylphénol 11 moles éthoxylé : | 1,6 g |
| Lauryl sulfate de Na : | 1,4 g |
| Xylène : | 17,2 g |
| Copolymère acrylique >95% : | 2,27 g |
| Acide oléique : | 0,5 g |
| Triéthanolamine : | 0,61 g |
| Dispersion PTFE (60% sec) : | 235,8 g |
| Dispersion Noir de fumée (25% sec) : | 38.4 g |
| Silice colloïdale (30% sec) : | 154,5 g |
| NH₄OH d=0.9 | 5,1 g |
| Total : | 1000 g |

| **Compositions de finition sans silice colloïdale** | |
|---|---|
| | **finition incolore F1 sans silice** |
| Dispersion PTFE (60% sec) | 789 g |
| Dispersion PFA (50% sec) | 5 g |
| Noir de fumée (25% sec) | 0,2 g |
| Octylphénol 11 moles éthoxylé : | 6,36 g |
| Lauryl sulfate de Na : | 5,4 g |
| Eau : | 81,51 g |
| Xylène : | 66,24 g |
| Copolymère acrylique >95% : | 8,71 g |
| Acide oléique : | 1,93 g |
| Triéthanolamine : | 2,25 g |
| Iriodin 153 : | 2 g |
| Iriodin 225 : | 20 g |
| Propylène Glycol : | 11,3 g |
| Total | 1000 g |
| Iriodin 153 et 225 sont des paillettes pigmentaires (mica et oxyde de titane) commercialisées par la société MERCK | |

| | **finition bleue F2 sans silice** |
|---|---|
| Dispersion PTFE (60% sec) | 789 g |
| Dispersion PFA (50% sec) | ---- |
| Noir de fumée (25% sec) | ---- |
| Octylphénol 11 moles éthoxylé : | 7, 1 g |
| Lauryl sulfate de Na : | 6, 03 g |
| Eau : | 90, 96 g |
| Xylène : | 73,92 g |
| Copolymère acrylique >95% : | 9,72 g |
| Acide oléique : | 2,15 g |
| Triéthanolamine : | 2,62 g |
| Iriodin 153 | 2 g |
| Propylène Glycol | 16,5 g |
| Total | 1000 g |

| **Compositions de finition selon l'invention avec silice colloïdale** | | |
|---|---|---|
| | **Finition incolore F3 (1,5 % ES de silice)** | **Finition bleue F4 (1,5 % ES de silice)** |
| Dispersion PTFE (60% sec) | 750 g | 750 g |
| Dispersion PFA (50% sec) | 4,8 g | ---- |
| Noir de fumée (25% sec) | 0,2 g | ---- |
| Octylphénol 11 moles éthoxylé : | 6,05 g | 6,7 |
| Lauryl sulfate de Na : | 5,1 g | 5,8 |
| Eau : | 77,01 g | 86,18 |
| Xylène : | 62,59 g | 9,21 |
| Copolymère acrylique >95% : | 8,21 | 2,04 |
| Acide oléique: | 1,82g | 2,0 |
| Triéthanolamine : | 2,21g | 2,38 |
| Iriodin 153 | 1,9 g | 1,9 g |
| Iriodin 225 | 19,1 g | |
| Propylène Glycol | 11 g | 15,7 g |
| Silice colloïdale | 50 g | 50 g |
| (à 30% d'extrait sec) | | |
| **Total** | **1000 g** | **1000 g** |

| | **Finition incolore F5 (2,4 % ES de silice)** | **Finition bleue F6 (2,4 % ES de de silice)** |
|---|---|---|
| Dispersion PTFE (60% sec) | 725,9 g | 725, 9 g |
| Dispersion PFA (50% sec) | 4,6 g | ---- |
| Noir de fumée (25% sec) | 0,2 g | ---- |
| Octylphénol 11 moles éthoxylé : | 5,86 g | 6,57 |
| Lauryl sulfate de Na : | 5 g | 5,57 |
| Eau : | 75 g | 84,15 |
| Xylène : | 60,8 g | 68, 4 |
| Copolymère acrylique >95% : | 8,01 g | 9 |
| Acide oléique : | 1,78 g | 2 |
| Triéthanolamine : | 2,16 g | 2,41 |
| Iriodin 153 | 1,8 g | 1,8 g |
| Iriodin 225 | 18,4 g | |
| Propylène Glycol | 10,4 g | 14,2 g |
| Silice colloïdale | 80 g | 80 g |
| (à 30% d'extrait sec) | | |
| **Total** | **1000 g** | **1000 g** |

| | **Finition incolore F7 (3,9% ES de silice)** | **Finition bleue F8 (3,9% ES de silice)** |
|---|---|---|
| Dispersion PTFE (60% sec) | 686,42 g | 686,42 g |
| Dispersion PFA (50% sec) | 3,48 g | ---- |
| Noir de fumée (25% sec) | 0,17 g | ---- |
| Octylphénol 11 moles éthoxylé : | 36,9 g | 6,18 |
| Lauryl sulfate de Na : | 31,3 g | 5,24 |
| Eau : | 472,5 g | 79,13 |
| Xylène : | 384 g | 64,31 |
| Copolymère acrylique >95% : | 50,5 g | 8,46 |
| Acide oléique : | 11,2 g | 1,88 |
| Triéthanolamine : | 13,6 g | 2,28 |
| Iriodin 153 | 1,8 g | 1,8 g |
| Iriodin 225 | 17,5 g | |
| Propylène Glycol | 9,83 g | 14,3 g |
| Silice colloïdale | 130 g | 130 g |
| (à 30% d'extrait sec) | | |
| **Total** | **1000 g** | **1000 g** |

| **Composition de pâte pigmentaire à déposer sur le fond par sérigraphie ou tampographie** | | |
|---|---|---|
| **(Ci-après désignée par PST)** | | |
| Dispersion PTFE (60% sec) | 668,5 g | |
| Pigment oxyde de fer 3395 | 8.12 g | |
| Pigment jaune Sicoplast® 25-9150C | 24,48 g | |
| Eau | 45,8 g | |
| Huile minérale/ester acide gras | 0,14 g | |
| Octylphénol 11 moles éthoxylé | 0,06 g | |
| Iriodin 500 | 22,9 g | |
| Iriodin 522 | 15.4 g | |
| Propylène Glycol | 161,8 g | |
| Huile minérale/ester acide gras | 21,1 g | |
| Dispersion copolymère acrylique polyélectrolyte (30%) | 26,5 g | |
| NH₄OH (d=0,9) | 5,2 g | |
| Total | 1000 g | |

### EXEMPLES COMPARATIFS

On enduit de manière classique la surface intérieure des calottes creuses (qu'elles soient sablées ou lisses) en aluminium en procédant comme suit :
- on pulvérise sur cette surface intérieure une composition de revêtement antiadhésif à base de résine fluorocarbonée (PTFE typiquement) ;
- puis on réalise un pré-frittage de ce revêtement antiadhésif à une température comprise entre 350 °C et 360°C pendant 1 à 3 minutes : cette opération permet de fritter suffisamment ce revêtement et de le rendre manipulable.

Puis, l'article est retourné et l'on pulvérise une couche fine de primaire noir (≈6 µm) sur la totalité de la surface extérieure de chaque calotte. La formulation du primaire noir permet de masquer l'aluminium sous une faible épaisseur.

La couche de primaire humide ainsi formée est alors séchée à une température d'environ 65°C jusqu'à ne plus être collante.

Une couche de finition transparente (F1) ou colorée (F2) est ensuite pulvérisée sur la jupe (paroi latérale) de la calotte avec un minimum de recouvrement du fond métallique de la calotte.

Après séchage, une pâte pigmentaire ayant une couleur cuivrée est ensuite sérigraphiée sur la face extérieure du fond de chaque calotte.

Les deux couches de finition F1 et F2 conduisent chacune rapidement (au bout de 4 pièces sérigraphiées seulement) à des manques importants au niveau de la définition du décor. En effet, lorsque l'on vérifie l'envers de l'écran de sérigraphie servant à déposer la pâte pigmentaire, on constate que de la poudre de PTFE et de pigments bouche de nombreuses mailles de l'écran (phénomène d'encrassement).

### EXEMPLES SELON L'INVENTION

Pour pallier le phénomène d'encrassement de l'écran de sérigraphie précité, la composition des couches de finition (F1 et F2) des exemples comparatifs a été modifiée comme suit par l'ajout de silice colloïdale :
▪ compositions de finition F3 et F4 : ajout de 5% de silice colloïdale à 30% d'extrait sec (1,5 g en humide),
▪ compositions de finition F5 et F6 : ajout de 8% de silice colloïdale à 30% d'extrait sec (2,4 g en humide),
▪ compositions de finition F7 et F8 (ajout de 13% de silice colloïdale à 30% d'extrait sec (3,9 en humide).

Tous les autres paramètres du procédé étant identiques par ailleurs, il a été constaté que :
▪ les compositions de finition F3 et F4 ne bouchent les mailles de l'écran de sérigraphie qu'au bout de 80 pièces, ce qui est acceptable d'au point de vue fabrication à l'échelle industrielle
▪ avec les compositions de finition F5 et F6 bleu₈, ce défaut d'encrassement n'apparaît qu'au bout de 150 pièces, et
▪ avec les compositions de finition F7 et F8, ce défaut d'encrassement n'apparaît qu'au bout de 250 pièces, ce qui est excellent.

Le procédé selon l'invention mettant en oeuvre des compositions de finition avec au moins 1,5% en poids de silice colloïdale peut donc s'industrialiser sans problèmes.

## Revendications

1. Article culinaire (1) comprenant :
- une calotte métallique creuse (2) présentant un fond (21) et une paroi latérale (22) s'élevant à partir dudit fond (21), ladite calotte présentant une face intérieure (201) concave destinée à être disposée du côté des aliments susceptibles d'être introduits dans ledit article (1), et une face extérieure (202) destinée à être disposée vers une source de chaleur, et
- un revêtement externe (3) recouvrant ladite face extérieure (202),
ledit revêtement externe (3) comportant :
- une couche de primaire d'accrochage (31) recouvrant la totalité de la face extérieure (202),
- une couche de finition (32) recouvrant ladite couche de primaire d'accrochage (31) au niveau de ladite paroi latérale (22), ladite couche de finition (32) comprenant au moins 3% de silice colloïdale par rapport au poids total de la couche de finition, et
- une couche de décor recouvrant partiellement ou totalement ladite couche de primaire d'accrochage (31) au niveau du fond (21) uniquement, ladite couche de décor comprenant au moins un motif, qui contient au moins un pigment lui conférant une couleur différente de celle de la couche de primaire (31) lesdites couches de primaire d'accrochage (31), de finition (32) et de décor comprenant au moins une résine fluorocarbonée seule ou en mélange avec une résine d'accrochage thermostable et résistant à au moins 200°C, cette au moins une résine formant un réseau continu fritté.

2. Article culinaire (1) selon la revendication 1, **caractérisé en ce que** ladite couche de finition (32) est également pigmentée.

3. Article culinaire (1) selon la revendication1 ou 2, **caractérisé en ce que** ladite couche de primaire (31) présente une épaisseur sensiblement uniforme dont la valeur moyenne est comprise entre 4 et 8 µm.

4. Article culinaire (1) selon l'une quelconque des revendications précédentes, **caractérisé en ce que** ladite couche de finition (32) présente une épaisseur sensiblement uniforme dont la valeur moyenne est comprise entre 12 µm et 18 µm.

5. Article culinaire (1) selon l'une quelconque des revendications précédentes, **caractérisé en ce que** ledit motif de ladite couche de décor comprend en outre au moins une charge.

6. Article culinaire (1) selon la revendication 5, **caractérisé en ce que** la charge est une charge minérale choisie parmi la silice, l'alumine, le corindon, les argiles, le quartz, et leurs mélanges.

7. Article culinaire (1) selon l'une quelconque des revendications précédentes, **caractérisé en ce que** le pigment est choisi parmi le dioxyde de titane, l'oxyde de fer II FeO, l'oxyde de fer III Fe₂O₃, le noir de carbone, le rouge de pérylène, les paillettes métalliques, les
oxydes mixtes de cobalt et de manganèse, les pigments bleus à base de mica et d'oxyde de titane.

8. Article culinaire (1) selon l'une quelconque des revendications précédentes, **caractérisé en ce que** ladite face intérieure (201) de la calotte (2) est recouverte d'un revêtement antiadhésif (4).

9. Article culinaire (1) selon la revendication 8, **caractérisé en ce que** ledit revêtement antiadhésif (4) est constitué d'un revêtement comprenant au moins une résine thermostable résistant à au moins 200°C.

10. Procédé de fabrication d'un article culinaire (1) comprenant les étapes successives suivantes :
a) fourniture d'une calotte (2) métallique préformée creuse, présentant un fond (21) et une paroi latérale (22) s'élevant à partir dudit fond (21), ladite calotte présentant une face intérieure (201) concave destinée à être disposée du côté des aliments susceptibles d'être introduits dans ledit article (1), et une face extérieure (202) destinée à être disposée vers une source de chaleur ;
b) dépôt par pulvérisation sur la totalité de la face extérieure (202) d'une composition de primaire pour former une couche humide de primaire d'accrochage (31) ;
c) séchage à une température comprise entre 40°C et 80°C de manière à rendre ladite couche humide de primaire d'accrochage maniable et non collante ;
d) dépôt par pulvérisation, sur la partie de la face extérieure (202) correspondant à la paroi latérale (22) dudit article (1), d'une composition de finition pour former une couche humide de finition (32), ladite composition de finition comportant au moins 1,5% en poids de silice colloïdale par rapport au poids de ladite composition de finition;
e) séchage de ladite couche humide de finition (32) ;
lesdites compositions de primaire d'accrochage, de finition, et de décor comprenant au moins une résine fluorocarbonée seule ou en mélange avec une résine d'accrochage thermostable et résistant à au moins 200°C.
f) application par sérigraphie, sur la partie de la face extérieure (202) correspondant au fond (21) dudit article (1), d'une pâte pigmentée de revêtement fluorocarboné de manière à former au moins une couche de décor non cuite de couleur différente de celle de ladite couche de primaire (31) ;
g) cuisson à une température comprise entre 390°C et 430°C, pendant une durée comprise entre 3 minutes et 12 minutes.

11. Procédé selon la revendication 10, **caractérisé en ce que** la composition de finition comprend au moins 2,4% et de préférence au moins 3,9% de silice.

12. Procédé selon l'une quelconque des revendications 10 et 11, **caractérisé en ce que** ladite couche de finition (32) est également pigmentée.

13. Procédé selon la revendication 12, **caractérisé en ce qu'**il comporte en outre une étape b') de réalisation d'un revêtement antiadhésif (4) sur ladite face intérieure (201) de la calotte (2), qui précède l'étape b) de dépôt par pulvérisation de la composition de primaire pour former une couche humide de primaire d'accrochage (31).

14. Procédé selon la revendication 13, **caractérisé en ce que** l'étape b') de réalisation d'un revêtement antiadhésif (4) sur ladite face intérieure (201) de la calotte (2) comprend l'application puis une cuisson de pré-frittage d'une composition de revêtement antiadhésif.

15. Procédé selon la revendication 14, **caractérisé en ce que** le préfrittage est réalisé à une température comprise entre 250°C et 360°C pendant une à 3 minutes dans le cas d'une composition de revêtement antiadhésif comprenant une résine fluorocarbonée.

16. Procédé selon l'une quelconque des revendications 10 à 15, **caractérisé en ce qu'**il comporte en outre une étape a') de préparation de surface de la face extérieure (202) de la calotte (2), cette étape a') de préparation de surface précédant l'étape b) de dépôt par pulvérisation d'une composition de primaire pour former une couche humide de primaire d'accrochage (31).

## Patentansprüche

1. Kochgeschirr (1), das enthält:
- eine vertiefte Metallschale (2), die einen Boden (21) und eine Seitenwand (22) aufweist, welche sich ausgehend vom Boden (21) erhebt, wobei die Schale eine konkave Innenseite (201), die dazu bestimmt ist, auf der Seite der Lebensmittel angeordnet zu sein, die in das Geschirr (1) eingeführt werden können, und eine Außenseite (202) aufweist, die dazu bestimmt ist, zu einer Wärmequelle hin angeordnet zu werden, und
- eine Außenbeschichtung (3), die die Außenseite (202) bedeckt, wobei die Außenbeschichtung (3) aufweist:
- eine Haftgrundierungsschicht (31), die die Gesamtheit der Außenseite (202) bedeckt,
- eine Deckschicht (32), die die Haftgrundierungsschicht (31) im Bereich der Seitenwand (22) bedeckt, wobei die Deckschicht (32) mindestens 3% kolloidales Siliciumdioxid bezüglich des Gesamtgewichts der Deckschicht enthält, und
- eine Dekorschicht, die die Haftgrundierungsschicht (31) nur im Bereich des Bodens (21) teilweise oder ganz bedeckt, wobei die Dekorschicht mindestens ein Muster umfasst, das mindestens ein Pigment enthält, welches ihr eine andere Farbe als diejenige der Grundierungsschicht (31) verleiht,
wobei die Haftgrundierungs- (31), Deck- (32) und Dekorschichten mindestens ein Fluorkohlenstoffharz alleine oder mit einem thermostabilen und gegen mindestens 200°C beständigen Haftharz vermischt enthält, wobei dieses mindestens eine Harz ein gesintertes durchgehendes Netz formt.

2. Kochgeschirr (1) nach Anspruch 1, **dadurch gekennzeichnet, dass** die Deckschicht (32) ebenfalls pigmentiert ist.

3. Kochgeschirr (1) nach Anspruch 1 oder 2, **dadurch gekennzeichnet, dass** die Grundierungsschicht (31) eine im Wesentlichen gleichmäßige Dicke aufweist, deren Mittelwert zwischen 4 und 8 µm liegt.

4. Kochgeschirr (1) nach einem der vorhergehenden Ansprüche, **dadurch gekennzeichnet, dass** die Deckschicht (32) eine im Wesentlichen gleichmäßige Dicke aufweist, deren Mittelwert zwischen 12 µm und 18 µm liegt.

5. Kochgeschirr (1) nach einem der vorhergehenden Ansprüche, **dadurch gekennzeichnet, dass** das Muster der Dekorschicht außerdem mindestens einen Füllstoff enthält.

6. Kochgeschirr (1) nach Anspruch 5, **dadurch gekennzeichnet, dass** der Füllstoff ein mineralischer Füllstoff ist, der ausgewählt wird aus Siliciumdioxid, Aluminiumoxid, Korund, den Tonerden, Quarz und ihren Mischungen.

7. Kochgeschirr (1) nach einem der vorhergehenden Ansprüche, **dadurch gekennzeichnet, dass** das Pigment ausgewählt wird aus Titandioxid, Eisen(II)oxid FeO, Eisen(III)oxid Fe₂0₃, Ruß, Perylen-Rot, den Metallflocken, den Mischoxiden von Kobalt und Mangan, den Blaupigmenten auf der Basis von Glimmer und Titanoxid.

8. Kochgeschirr (1) nach einem der vorhergehenden Ansprüche, **dadurch gekennzeichnet, dass** die Innenseite (201) der Schale (2) mit einer Antihaftbeschichtung (4) bedeckt ist.

9. Kochgeschirr (1) nach Anspruch 8, **dadurch gekennzeichnet, dass** die Antihaftbeschichtung (4) aus einer Beschichtung besteht, die mindestens ein gegen mindestens 200°C beständiges thermostabiles Harz enthält.

10. Verfahren zur Herstellung eines Kochgeschirrs (1), das die folgenden aufeinanderfolgenden Schritte enthält:
a) Bereitstellen einer vertieften vorgeformten Metallschale (2), die einen Boden (21) und eine Seitenwand (22) aufweist, welche sich ausgehend von dem Boden (21) erhebt, wobei die Schale eine konkave Innenseite (201), die dazu bestimmt ist, auf der Seite der Lebensmittel angeordnet zu sein, die in das Geschirr (1) eingeführt werden können, und eine Außenseite (202) aufweist, die dazu bestimmt ist, zu einer Wärmequelle hin angeordnet zu werden;
b) Beschichten durch Zerstäuben einer Grundierungszusammensetzung über die Gesamtheit der Außenseite (202), um eine feuchte Haftgrundierungsschicht (31) zu formen;
c) Trocknen bei einer Temperatur zwischen 40°C und 80°C, um die feuchte Haftgrundierungsschicht griffig und nicht klebend zu machen;
d) Beschichten durch Zerstäuben, in dem Bereich der Außenseite (202), der der Seitenwand (22) des Geschirrs (1) entspricht, einer Deckzusammensetzung, um eine feuchte Deckschicht (32) zu formen, wobei die Deckzusammensetzung mindestens 1,5 Gew.-% kolloidales Siliciumdioxid bezüglich des Gewichts der Deckzusammensetzung enthält;
e) Trocknen der feuchten Deckschicht (32);
wobei die Haftgrundierungs-, Deck- und Dekorschichten mindestens ein Fluorkohlenstoffharz alleine oder mit einem thermostabilen und gegen mindestens 200°C beständigen Grundierungsharz vermischt enthalten;
f) Aufbringen durch Siebdruck, auf den Bereich der Außenseite (202) entsprechend dem Boden (21) des Geschirrs (1), einer pigmentierten Fluorkohlenstoffbeschichtungspaste, um mindestens eine nicht gebrannte Dekorschicht anderer Farbe als diejenige der Grundierungsschicht (31) zu formen;
g) Brennen bei einer Temperatur zwischen 390°C und 430°C während einer Dauer zwischen 3 Minuten und 12 Minuten.

11. Verfahren nach Anspruch 10, **dadurch gekennzeichnet, dass** die Deckzusammensetzung mindestens 2,4% und vorzugsweise mindestens 3,9% Siliciumdioxid enthält.

12. Verfahren nach einem der Ansprüche 10 und 11, **dadurch gekennzeichnet, dass** die Deckschicht (32) ebenfalls pigmentiert ist.

13. Verfahren nach Anspruch 12, **dadurch gekennzeichnet, dass** es außerdem einen Schritt b') der Herstellung einer Antihaftbeschichtung (4) auf der Innenseite (201) der Schale (2) enthält, der vor dem Schritt b) der Zerstäubungsbeschichtung mit der Grundierungszusammensetzung liegt, um eine feuchte Haftgrundierungsschicht (31) zu formen.

14. Verfahren nach Anspruch 13, **dadurch gekennzeichnet, dass** der Schritt b') der Herstellung einer Antihaftbeschichtung (4) auf der Innenseite (201) der Schale (2) das Aufbringen und dann einen Vorsinterbrand einer Antihaftbeschichtungszusammensetzung enthält.

15. Verfahren nach Anspruch 14, **dadurch gekennzeichnet, dass** die Vorsinterung bei einer Temperatur zwischen 250°C und 360°C während 1 bis 3 Minuten im Fall einer Antihaftbeschichtungszusammensetzung erfolgt, die ein Fluorkohlenstoffharz enthält.

16. Verfahren nach einem der Ansprüche 10 bis 15, **dadurch gekennzeichnet, dass** es außerdem einen Schritt a') der Oberflächenvorbereitung der Außenseite (202) der Schale (2) enthält, wobei dieser Schritt a') der Oberflächenvorbereitung vor dem Schritt b) der Zerstäubungsbeschichtung mit einer Grundierungszusammensetzung liegt, um eine feuchte Haftgrundierungsschicht (31) zu formen.

## Claims

1. Cookware article (1) comprising:
- a hollow metal shell (2) exhibiting a bottom (21) and a side wall (22) rising from the said bottom (21), the said shell exhibiting a concave internal face (201) intended to be positioned on the side of the foods liable to be introduced into the said article (1) and an external face (202) intended to be positioned facing a heat source, and
- an exterior coating (3) covering the said external face (202),
the said exterior coating (3) comprising:
- a tie primary layer (31) covering all of the external face (202),
- a finishing layer (32) covering the said tie primary layer (31) on the said side wall (22), the said finishing layer (32) comprising at least 3% of colloidal silica, with respect to the total weight of the finishing layer, and
- a decorative layer partially or completely covering the said tie primary layer (31) on the bottom (21) solely, the said decorative layer comprising at least one pattern, which comprises at least one pigment conferring on it a different colour from that of the primary layer (31),
the said tie primary layer (31), finishing layer (32) and decorative layer comprising at least one fluorocarbon resin, alone or as a mixture with a thermally stable tie resin and resistant to at least 200°C, this at least one resin forming a continuous sintered network.

2. Cookware article (1) according to Claim 1, **characterized in that** the said finishing layer (32) is also pigmented.

3. Cookware article (1) according to Claim 1 or 2, **characterized in that** the said primary layer (31) exhibits a substantially uniform thickness, the mean value of which is between 4 and 8 µm.

4. Cookware article (1) according to any one of the preceding claims, **characterized in that** the said finishing layer (32) exhibits a substantially uniform thickness, the mean value of which is between 12 µm and 18 µm.

5. Cookware article (1) according to any one of the preceding claims, **characterized in that** the said pattern of the said decorative layer additionally comprises at least one filler.

6. Cookware article (1) according to Claim 5, **characterized in that** the filler is an inorganic filler chosen from silica, alumina, corundum, clays, quartz and their mixtures.

7. Cookware article (1) according to any one of the preceding claims, **characterized in that** the pigment is chosen from titanium dioxide, iron(II) oxide FeO, iron(II) oxide Fe₂O₃, carbon black, perylene red, metal glitter, mixed oxides of cobalt and manganese, or blue pigments based on mica and on titanium oxide.

8. Cookware article (1) according to any one of the preceding claims, **characterized in that** the said internal face (201) of the shell (2) is covered with a non-stick coating (4).

9. Cookware article (1) according to Claim 8, **characterized in that** the said non-stick coating (4) is composed of a coating comprising at least one thermally stable resin which is resistant to at least 200°C.

10. Process for the manufacture of a cookware article (1) comprising the following successive stages:
a) providing a hollow preformed metal shell (2) exhibiting a bottom (21) and a side wall (22) rising from the said bottom (21), the said shell exhibiting a concave internal face (201) intended to be positioned on the side of the foods liable to be introduced into the said article (1) and an external face (202) intended to be positioned facing a heat source;
b) depositing, by spraying, a primary composition over all of the external face (202) in order to form a wet tie primary layer (31);
c) drying at a temperature of between 40°C and 80°C, so as to render the said wet tie primary layer easy to handle and non-tacky;
d) depositing, by spraying, a finishing composition over the portion of the external face (202) corresponding to the side wall (22) of the said article (1), in order to form a wet finishing layer (32), the said finishing composition comprising at least 1.5% by weight of colloidal silica, with respect to the weight of the said finishing composition;
e) drying the said wet finishing layer (32);
the said tie primary composition, the said finishing composition and the said decorative composition comprising at least one fluorocarbon resin, alone or as a mixture with a thermally stable tie resin and resistant to at least 200°C;
f) applying, by screen printing, a pigmented paste of fluorocarbon coating to the portion of the external face (202) corresponding to the bottom (21) of the said article (1), so as to form at least one noncured decorative layer having a colour different from that of the said primary layer (31);
g) curing at a temperature of between 390°C and 430°C for a period of time of between 3 minutes and 12 minutes.

11. Process according to Claim 10, **characterized in that** the finishing composition comprises at least 2.4% and preferably at least 3.9% of silica.

12. Process according to either one of Claims 10 and 11, **characterized in that** the said finishing layer (32) is also pigmented.

13. Process according to Claim 12, **characterized in that** it additionally comprises a stage b') of producing a non-stick coating (4) on the said internal face (201) of the shell (2), which precedes the stage b) of depositing, by spraying, the primary composition in order to form a wet tie primary layer (31).

14. Process according to Claim 13, **characterized in that** the stage b') of producing a non-stick coating (4) on the said internal face (201) of the shell (2) comprises the application and then a presintering curing of a non-stick coating composition.

15. Process according to Claim 14, **characterized in that** the presintering is carried out at a temperature of between 250°C and 360°C for one to 3 minutes in the case of a non-stick coating composition comprising a fluorocarbon resin.

16. Process according to any one of Claims 10 to 15, **characterized in that** it additionally comprises a stage a') of surface preparation of the external face (202) of the shell (2), this stage a') of surface preparation preceding the stage b) of depositing, by spraying, a primary composition in order to form a wet tie primary layer (31).
